**Europäisches Patentamt**

(19) **European Patent Office**

**Office européen des brevets**

(11) Numéro de publication: **0 015 839**
**B1**

(12) **FASCICULE DE BREVET EUROPEEN**

(45) Date de publication du fascicule du brevet:
08.12.82

(21) Numéro de dépôt: **80400287.1**

(22) Date de dépôt: **29.02.80**

(51) Int. Cl.³: **G 09 B 9/06**

(54) Procédé et systèmes de génération électronique d'image animée à grand angle pour ensemble d'entraînement à la conduite des navires.

(30) Priorité: **02.03.79 FR 7905497**

(43) Date de publication de la demande:
**17.09.80 Bulletin 80/19**

(45) Mention de la délivrance du brevet:
**08.12.82 Bulletin 82/49**

(84) Etats contractants désignés:
**BE DE GB IT NL**

(56) Documents cités:
**FR-A-2 103 554**
**FR-A-2 106 031**
**FR-A-2 288 354**
**GB-A-1 131 539**
**GB-A-1 380 188**
**US-A-3 619 912**

(73) Titulaire: **THOMSON-CSF, 173, Boulevard Haussmann,
F-75379 Paris Cedex 08 (FR)**

(72) Inventeur: **Paris, Philippe Yves Jacques,
"THOMSON-CSF" - SCPI 173, Bld. Haussmann,
F-75360 Paris Cedex 08 (FR)**
Inventeur: **Couturier, Alain, "THOMSON-CSF"
-SCPI 173 Boulevard Haussmann, F-75360 Paris
Cedex 08 (FR)**

(74) Mandataire: **Thrierr, Francoise et al, THOMSON-CSF
SCPI 173, Bld Haussmann, F-75379 Paris Cedex 08 (FR)**

BUNDESDRUCKEREI BERLIN

## Procédé et systèmes de génération électronique d'image animée à grand angle pour ensemble d'entraînement à la conduite des navires.

La présente invention concerne, d'une manière générale, la génération d'une image animée à grand angle de champ à partir d'images élémentaires, distinctes, visualisées chacune sur un écran de tube cathodique.

Le problème de la juxtaposition optique et de la collimation de ces images élémentaires pour former à grande distance une image à grand angle de champ, a déjà été résolu par différents agencements connus, en particulier, par celui qui est décrit dans la demande de brevet FR-2 360 103.

La présente invention concerne plus exactement un système de génération électronique d'images conçu de façon que, les images élémentaires étant visualisées sur les tubes cathodiques d'un des agencements précités, la représentation et le passage d'objets animés d'une image élémentaire à une image adjacente, soient assurés sans discontinuités sur l'image à grand angle de champ.

Un domaine d'emploi important de l'invention est formé par les ensembles d'entraînement aux activités impliquant une observation visuelle circulaire à grande distance. L'enseignement pratique de la conduite des véhicules, par exemple, pour des raisons de coût, d'insécurité ou d'indisponibilité, ne peut être donné, très souvent, avec les véhicules réels mais au moyen d'ensembles d'entraînement appropriés. Ainsi les systèmes de génération d'image animée à grand angle décrits dans cette demande de brevet se rapportent plus particulièrement aux ensembles d'entraînement à la conduite des navires. Il est évident cependant que l'invention peut avoir d'autres domaines d'emploi.

Les ensembles d'entraînement à la conduite des navires, qui reproduisent à terre aussi fidèlement que possible les postes de conduite de navire, comportent des équipements simulant les équipements réels de navigation. La vue extérieure embrassée depuis ces postes de conduite est une caractéristique d'environnement difficile à reproduire. L'impression d'espace, nécessaire au réalisme de l'entraînement, ne peut être donnée que par une image à grand angle de champ et située apparemment à grande distance. Le champ de vision doit être aussi grand que possible, en gisement, c'est-à-dire dans le sens horizontal. Dans le sens vertical, par contre, étant donné l'hypothèse de navires de grandes dimensions navigant à distance notable des côtes, un champ de vision défini par un angle de site d'environ 10° au niveau de l'horizon apparaît comme suffisant. L'image à grand angle de champ, et par conséquent les images élémentaires qui la composent, doivent être évolutives en fonction: des mouvements du navire, de son orientation et en fonction bien entendu du trafic maritime observé.

Actuellement, les équipements commercialisés, les moins onéreux capables de fournir de telles images évolutives sont des générateurs d'image, à tube cathodique, du type moniteur, ou projecteur, de télévision dont les images peuvent être »travaillées.« suivant des procédés électroniques classiques dits »d'incrustation«. La représentation sur une image multiple, à grand angle de champ, d'un objet animé qui se déplace d'une image élémentaire à une autre, a déjà fait l'objet de différents brevets. Dans les brevets US-3 659 920 et US-3 619 912 ainsi que dans le brevet GB-1 380 188, le déplacement de l'objet est obtenu en retardant seulement les signaux de synchronisation des moniteurs, ce qui ne permet pas de représenter plusieurs objets animés de mouvements différents. Le système décrit dans le brevet US-3 560 644 exige que les pentes des signaux de balayage des caméras et des projecteurs de visualisation, soient modifiées en fonction de l'attitude et de l'emplacement des objets, ce qui empêche l'utilisation d'appareils de fabrication standard.

Le procédé selon la présente invention permet la représentation de plusieurs objets en utilisant des caméras et des moniteurs classiques.

Les images élémentaires visualisées respectivement sur des moniteurs de télévision, sont obtenues par lectures simultanées d'autant d'images synthétiques enregistrées sur une mémoire telle qu'une mémoire à vidéo-disque magnétique.

Les images snythétiques sont formées, une à une et de manière cyclique, par incrustation dans une image d'environnement, d'images d'objet fournies par des caméras de télévision.

Les caméras sont orientées chacune sur une maquette d'objet et sont synchronisées par des signaux de suppression de ligne respectivement retardés, de manière appropriée, par rapport au signal de suppression de ligne, dit de référence, commun aux moniteurs de télévision.

Plus précisément le procédé conforme à la présente invention, destiné en particulier à un ensemble d'entraînement à la conduite des navires, consiste à former une image à grand angle de champ par juxtaposition apparente d'images élémentaires visualisées respectivement sous un angle $\alpha$ sur autant de moniteurs de télévision placés dans un poste de conduite d'un système d'entraînement et suivant lequel un objet représenté sur ces images se déplace d'une image à une autre adjacente sans discontinuités afin de simuler le mouvement relatif de cet objet par rapport au poste de conduite, ce procédé étant caractérisé comme indiqué dans la revendication 1.

En outre l'invention concerne aussi un système de génération électronique d'image animée à grand angle comprenant: un dispositif d'incrustation qui reçoit un signal d'image d'objet, un signal d'image d'environnement et un signal de clé d'incrustation et qui fournit un signal de sortie constitué, en fonction du signal de clé, soit par le signal d'image d'objet soit par le signal d'image d'environnement; un premier générateur d'image qui fournit le signal d'image d'objet et qui comprend une caméra de télévision orientée sur une maquette d'objet animé; un ensemble de moniteurs de télévision, sur chacun desquels est visualisée une image élémentaire; un calculateur et son interface ainsi qu'un ensemble de synchronisation; ce système étant caractérisé comme indiqué dans la revendication 4.

D'autres caractéristiques et avantages du procédé et des systèmes de génération d'image selon l'invention apparaîtront dans la description d'exemples de réalisation qui font suite.

La figure 1 représente un schéma synoptique décrivant le procédé selon l'invention.

La figure 2 représente schématiquement l'image à grand angle formée d'images élémentaires, et définit les coordonnées d'un point de référence A de la maquette d'objet dans ces images.

La figure 3 représente le cycle de base du calculateur.

La figure 4 représente le schéma d'un système de génération d'image, selon l'invention, et pour lequel l'image est animée par un seul objet.

La figure 5 représente le schéma détaillé d'un circuit de décalage de ligne propre au système selon l'invention.

La figure 6 représente les diagrammes de signaux relatifs au circuit de décalage de ligne.

La figure 7 représente le schéma détaillé d'un circuit de commande d'incrustation propre au système selon l'invention.

La figure 8 représente les diagrammes de signaux relatifs au circuit de commande d'incrustation.

La figure 9 représente une variante perfectionnée du système selon l'invention, pour laquelle l'image est animée par M objets.

La figure 10 représente, sous une forme compacte, le générateur d'image décalée propre au système selon l'invention.

La figure 11 représente trois bateaux se masquant mutuellement.

La figure 12 représente les rangs des bateaux exprimés sous formes décimale et binaire.

La figure 13 représente un tableau qui rappelle le fonctionnement d'un encodeur de priorité classique.

La figure 14 représente le schéma détaillé d'un dispositif de détermination des masques propre à la première variante du système selon l'invention.

La figure 15 représente le schéma d'une seconde variante de système, selon l'invention, pour laquelle l'image est animée par un objet et formée par Z groupes de n images élémentaires.

La figure 16 représente le schéma d'une troisième variante du système, selon l'invention, pour laquelle l'image est animée par plusieurs objets et formée par Z groupes de n images élémentaires.

La description de l'invention est limitée à une image à grand angle de champ uniquement dans le sens horizontal. En effet, l'invention peut être généralisée aisément par l'homme de l'art, à une image à grand angle de champ aussi bien dans le sens horizontal que le sens vertical. Les objets sont considérés comme étant des bateaux en déplacement formant le trafic maritime rencontré par le »navire-école«; ce dernier étant simulé par le poste de conduite du système d'entraînement. Néanmoins, chacun d'eux pourrait être aussi bien une île, une bouée, une jetée ou une étendue de côte dont le déplacement relatif par rapport au navire-école dans son mouvement propre, doit être aussi simulé. Tous ces déplacements sont déterminés par des méthodes classiques de calcul et de programmation en accord avec l'exercice, prédéterminé ou non, et en accord avec les décisions éventuelles de l'instructeur. Dans la suite du texte, les mots -objet et bateau- seront indifféremment utilisés.

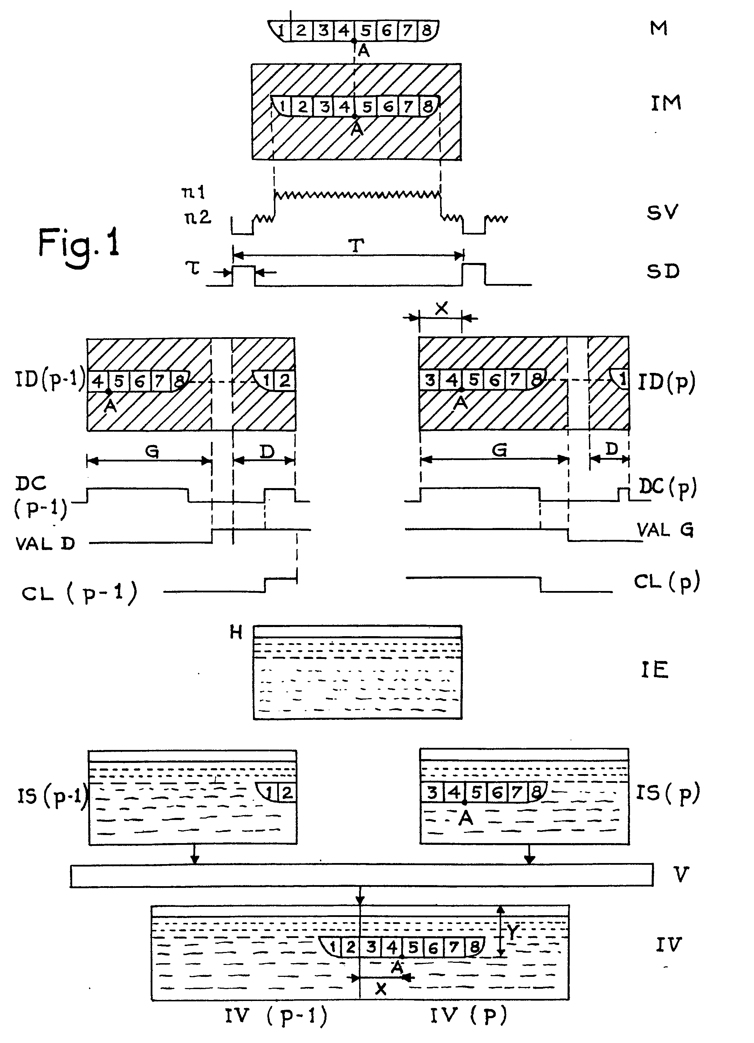

Une caméra de télévision, de construction classique, est orientée sur une maquette de bateau M. (figure 1), dont le dessin, pour l'explication est divisé en huit parties numérotées. L'attitude de la maquette varie en fonction de l'orientation du bateau à simuler tandis que la variation de la grandeur apparente de celui-ci, est obtenue par variation de la distance focale de l'objectif de prise de vue. La maquette est placée sur un support d'orientation de manière à être centrée par rapport à l'axe de rotation de ce support, qui permet de simuler le cap du bateau. Les coordonnées de ce bateau sont mesurées, dans l'image à grand angle de champ et dans les images visualisées élémentaires, par les coordonnées d'un point de référence A défini par l'intersection de l'axe de rotation du support et du plan de base de la maquette. L'axe optique de la caméra est orienté sur ce point et une image IM de la maquette, sur fond noir, est obtenue sur la cible de la caméra. Les dimensions et la distance de la maquette sont déterminées de façon que l'angle sous lequel apparaît celle-ci, reste compris à l'intérieur de l'angle d'ouverture de l'objectif. La caméra est synchronisée par un signal retardé de suppression de ligne SD et fournit un signal SV d'image d'objet. La maquette M est placée devant un arrière-plan suffisamment sombre pour que les niveaux, $n1$ et $n2$ du signal SV, qui correspondent respectivement à la luminosité de la maquette et à celle de l'arrière-plan, soient distincts.

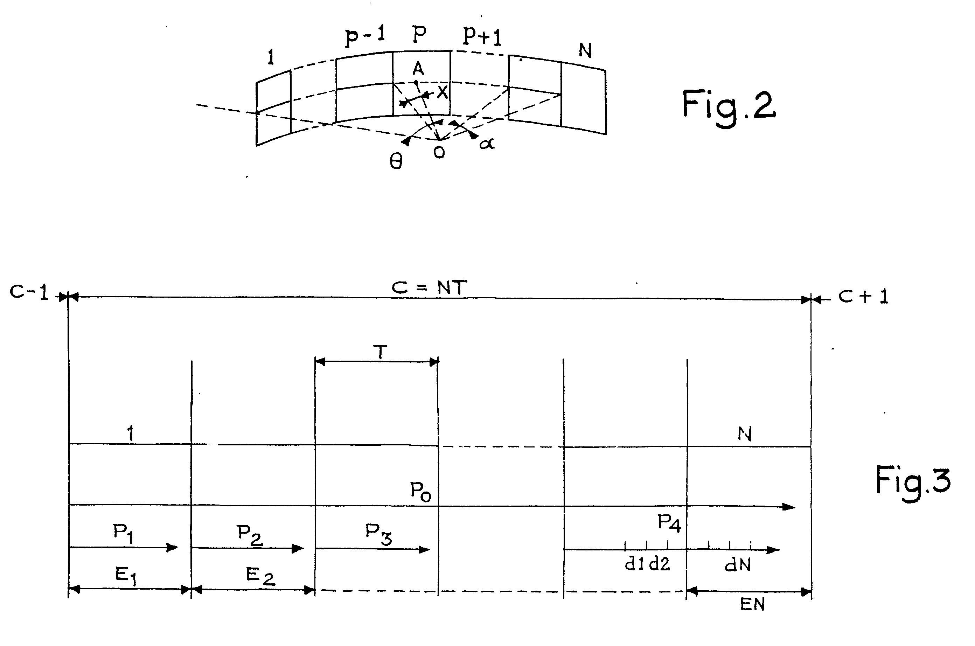

L'image à grand angle de champ (figure 2) est composée par un ensemble de N images élémentaires visualisées respectivement sur N moniteurs de télévision et apparemment juxtaposées circulairement au niveau de l'horizon par des moyens optiques ne faisant pas partie de l'invention. Chaque image élémentaire est vue sous un angle $\alpha$ dans le sens horizontal. L'ordre p de l'image élémentaire particulière dans laquelle est situé, à un instant donné, le point de référence A, est donné par la partie entière plus un du quotient de la division par l'angle $\alpha$, du gisement $\theta$ de ce point de référence dans l'image à grand angle. L'angle de gisement X du point A dans l'image d'ordre p, est mesuré par le reste de la division du gisement $\Theta$ par l'angle $\alpha$

$$\Theta = (p-1)\alpha + x$$

La figure 1 concerne le cas où le gisement X est inférieur à la moitié de l'angle $\alpha$, et pour lequel le bateau, suivant l'angle sous lequel il est vu, est susceptible d'apparaître également en partie sur l'image visualisée d'ordre p−1. Les résultats relatifs aux cas où le gisement X est, soit supérieur, soit égal à la moitié de l'angle $\alpha$, s'en déduiront aisément. Le signal SD est affecté d'un retard déterminé, par rapport au signal de référence de suppression de ligne SL qui est fourni à tous les moniteurs. Ce dernier signal n'est pas représenté sur la figure 1. Ainsi, le signal SV donnerait, sur un tube cathodique de contrôle synchronisé par le signal SL, une image »décalée« telle que l'image ID (p), ou telle que l'image ID (p−1), suivant la valeur du retard du signal SD. Une bande verticale noire divise chacune de ces images en deux parties: une partie droite D et une partie gauche G, de part et d'autre, de cette bande. Chaque partie droite est formée par une certaine fraction de la partie gauche de l'image IM. De plus, une partie de l'image IM manque dans chacune des images décalées, à savoir celle qui correspond à la partie 2 de la maquette, pour l'image ID (p) et celle qui correspond à la partie 3 de la maquette, pour l'image ID (p−l). Les fractions du signal qui correspondaient dans l'image IM à ces deux parties manquantes sont en coincidence de temps avec les impulsions du signal SI fourni au tube cathodique de contrôle et par conséquent ne peuvent pas être visualisées sur l'éctran de ce tube.

Les images élémentaires visualisées IV sont obtenues par lectures simultanées de N images IS, dites synthétiques, enregistrées séquentiellement sur une mémoire à vidéo-disque V (figure 1). Les images synthétiques sont déterminées, une à une, à partir d'une image d'environnement IE et, lorsque le bateau doit apparaître dans l'image élémentaire considérée, à partir d'une image décalée ID et par incrustation de celle-ci, de manière appropriée, dans l'image d'environnement. L'image d'environnement représente la surface de la mer de manière figurative ou »stylisée« ou plus simplement encore, consiste en une ligne H horizontale simulant l'horizon et séparant deux zones de teintes différentes. Cette image peut être fournie par des circuits classiques de génération synthétique d'image.

La figure 1 concerne plus particulièrement la génération des deux images élémentaires IV (p−1) et IV (p) sur chacune desquelles un même bateau doit apparaître partiellement. Les images synthétiques IS (p−1) et IS (p) correspondantes sont respectivement obtenues par incrustation dans l'image IE, de l'image décalée ID (p−1) et de l'image décalée ID (p) tandis que ces deux dernières images sont elles-mêmes obtenues à partir de l'image IM; un retard approprié à chacune d'elles affectant le signal SD. Le retard R (p) correspondant à l'image ID (p) est déterminé de façon que le gisement du point de référence A dans cette image soit égal à la valeur X calculée. L'image ID (p−1) est décalée de manière que dans la partie droite de cette image apparaisse la partie manquante de l'image IM dans l'image ID (p), c'est-à-dire la partie 2. Puisque la largeur de la partie manquante est déterminée, si l'on néglige la durée des marges optiques de cadrage, par la durée $\tau$ des impulsions du signal SL le retard correspondant à l'image (p−1) est donné par:

$$R(p-1) = R(p) - \tau$$

L'incrustation des images décalées dans l'image d'environnement est faite de manière que, d'une part, l'arrière plan, plus ou moins sombre, soit éliminé et que d'autre part les parties inutiles des images, la partie gauche pour l'image ID (p−1) et la partie droite pour l'image ID (p), soient également éliminées. L'incrustation est effectuée, ligne par ligne, et déterminée par un signal de clé d'incrustation CL qui résulte des présences simultanées d'un signal classique DC de détection d'objet et d'un signal de validation VAL. Ce signal de validation, différent suivant l'ordre de l'image, peut être obtenu facilement, comme il sera montré ultérieurement, à partir du signal SD et du signal SL. Lorsqu'il s'agit de l'image ID (p), le signal de validation, désigné par VAL G, élimine la partie droite de l'image décalée. Lorsqu'il s'agit de l'image ID (p−l), le signal de validation, désigné par VAL D, élimine la partie gauche de l'image décalée.

Lorsque le gisement X est supérieur à $\alpha/2$, et suivant l'angle sous lequel il est vu, le bateau est susceptible d'apparaître sur l'image élémentaire d'ordre (p+1) située à droite de l'image élémentaire d'ordre p. Dans ce cas, le retard R (p) correspondant à l'image ID (p) est déterminé de façon que le gisement X dans cette image soit encore égal à la valeur X calculée, tandis que le retard correspondant à l'image (p+1) est donné par la relation:

$$R(p+1) = R(p) + \tau$$

Le signal de validation correspondant à l'image décalée ID (p) est alors un signal VAL D éliminant la partie gauche de l'image, tandis que le signal de validation correspondant à l'image décalée ID (p−1) est un signal VAL G qui élimine la partie droite de l'image. Lorsque le gisement X est considéré comme étant égal à $\alpha/2$, les images décalées ID (p−l) et ID (p+1) n'existent pas tandis que les signaux VAL D et VAL G sont tous les deux utilisés successivement.

Toutes les opérations décrites sont déterminées et déclenchées de manière cyclique par un calculateur classique. Le cycle de base C, formé de N périodes d'image T est représenté sur la figure 3. La durée d'une période T est, par exemple, de 40 ms dans le système CCIR à 625 lignes et 50 Hz:

Un programme moniteur PO déclenche: les appels des programmes de calcul (P1, P2, P3 et P4), les interruptions. les gestions entrées/sorties des circuits d'interface. Le programme P1 concerne le calcul des coordonnées et du cap du navire-école en fonction de la vitesse et de l'angle de barre affichés par l'élève dans leposte de conduite du système d'entraînement. Le programme P2 concerne les coordonnées, le cap et la vitesse du bateau à simuler. Ces données peuvent être prédéterminées ou modifiées par l'instructeur au fur et à mesure du déroulement de l'exercice. Le programme P3 concerne les coordonnées relatives du bateau à simuler par rapport au navire-école. Il détermine en particulier le gisement $\theta$, le gisement X, le site Y ainsi que la distance et l'orientation de ce bateau par rapport au navire-école. Il déclenche les modifications d'attitude de la maquette résultant de ces calculs. Le programme P4 concerne la visualisation, c'est-à-dire les calculs des données d1, d2, ... dN qui déterminent, à chaque cycle, la configuration de chaque image visualisée. Ces données sont effectivement utilisées pour former et enregistrer de manière séquentielle les N images synthétiques au cycle C+1 suivant et respectivement durant les intervalles de temps E1, E2, ... EN. Ces données comprennent en particulier: l'ordre de l'image calculée, le gisement X, le type du signal de validation (VAL D ou VAL G), là valeur du retard à donner au signal de suppression SD (R, R−$\tau$, R+$\tau$), l'adresse de piste pour la mémoire à vidéo-disque.

Le fait que les images synthétiques soient calculées et »remises à jour« de manière périodique introduit une limitation à la rapidité d'évolution admissible de l'image. Dans le cas present, d'un système d'entraînement à la conduite des navires, la pratique a montré, qu'étant donné l'évolution assez lente de la scène représentée, un cycle NT de mise à jour de 120 ms (soit trois images élémentaires dans l'image à grand angle de champ) est parfaitement acceptable. Ce nombre peut toutefois être augmenté sensiblement suivant l'appréciation subjective des observateurs et le type d'exercice simulé. Bien que le nombre N d'images élémentaires soit ainsi limité, la génération d'un image animée, à caractère panoramique, est possible au moyen de systèmes obtenus par une généralisation du procédé qui vient d'être décrit. Une description de ces systèmes est donnée dans la suite du texte.

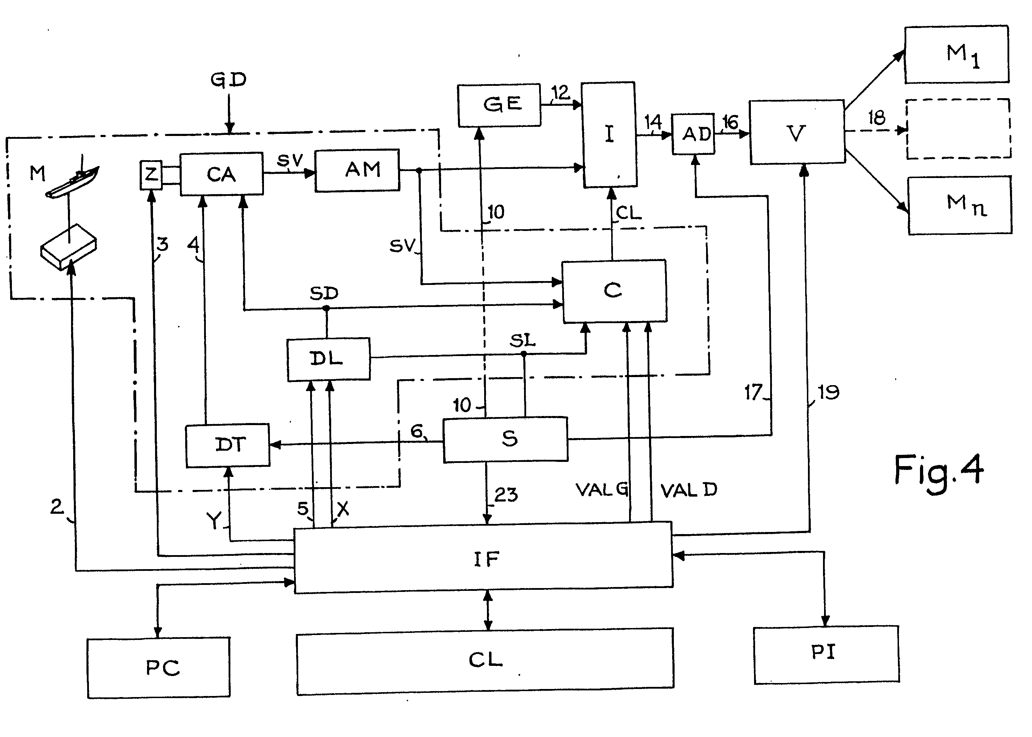

Le schéma du système de génération électronique d'image animée selon l'invention qui met en oeuvre le procédé décrit, est représenté sur la figure 4. Le système permet de faire apparaître un bateau en mouvement sur l'image à grand angle de champ.

La caméra de télévision CA reçoit le signal retardé SD de suppression de ligne, un signal retardé 4 de suppression de trame et un signal 3 de commande du dispositif optique Z à focale variable monté sur la caméra. Elle fournit le signal, à vidéofréquence, SV d'image à un circuit classique AM d'adaptation et d'alignement. Le signal SV, une fois adapté et aligné, est appliqué au circuit C de commande d'incrustation et au dispositif d'incrustation I. Un générateur GE fournit le signal à vidéo-fréquence 12 d'image d'environnement et reçoit des signaux classiques 10 de synchronisation. Le dispositif d'incrustation I est formé par un circuit électronique analogue à un sélecteur à deux positions. Il reçoit le signal SV, le signal 12 et le signal de clé d'incrustation CL. Il fournit un signal 14 correspondant à l'image synthétique IS. Ce signal 14 est formé soit par le signal 12 soit par le signal SV suivant le niveau logique du signal CL. Un circuit additionneur AD ajoute au signal 14, les signaux de synchronisation nécessaires 17 (dont le signal de référence de suppression de ligne) pour former un signal à vidéo-fréquence composite 16. La mémoire à vidéo-disque V reçoit le signal composite 16 et un signal d'adresse de piste 19. Le vidéo-disque comprend, au moins, autant de pistes d'enregistrement que d'images élémentaires visualisées. Le signal 16 est enregistré, à chaque période T, sur la piste dont l'adresse est contenue dans le signal 19. Les pistes sont lues simultanément pendant chaque période d'image T et les signaux de lecture 18 sont respectivement appliqués aux moniteurs. Le circuit C reçoit le signal SD, le signal SL, les deux signaux de validation VAL D et VAL G. Il fournit le signal CL. Un circuit de décalage de ligne DL fournit le signal SD. Il reçoit le signal SL, un signal de gisement X et un signal de retard 5. Un circuit de décalage de trame DT fournit le signal 4. Il reçoit un signal de site Y et un signal de suppression de trame 6. L'ensemble formé par: la maquette M; la caméra CA avec son dispositif optique Z, les circuits DL et DT ainsi que le circuit C, peut être considéré comme étant un générateur d'image décalée GD. L'ensemble de synchronisation S fournit: le signal SL, le signal 6, les signaux de synchronisation 17 ainsi que les signaux de synchronisation 23 nécessaires à la programmation. Les circuits d'interface IF reçoivent les signaux 23. Ils fournissent des signaux 2 de commande d'attitude de la maquette, le signal 3 de commande du dispositif optique Z, les signaux de gisement X et de site Y, le signal 5, les signaux VAL D et VAL G ainsi que le signal 19. Ils échangent de plus avec le poste de conduite PC et le pupitre de l'instructeur PI tous les signaux de commande et d'affichage nécessaires à l'entraînement.

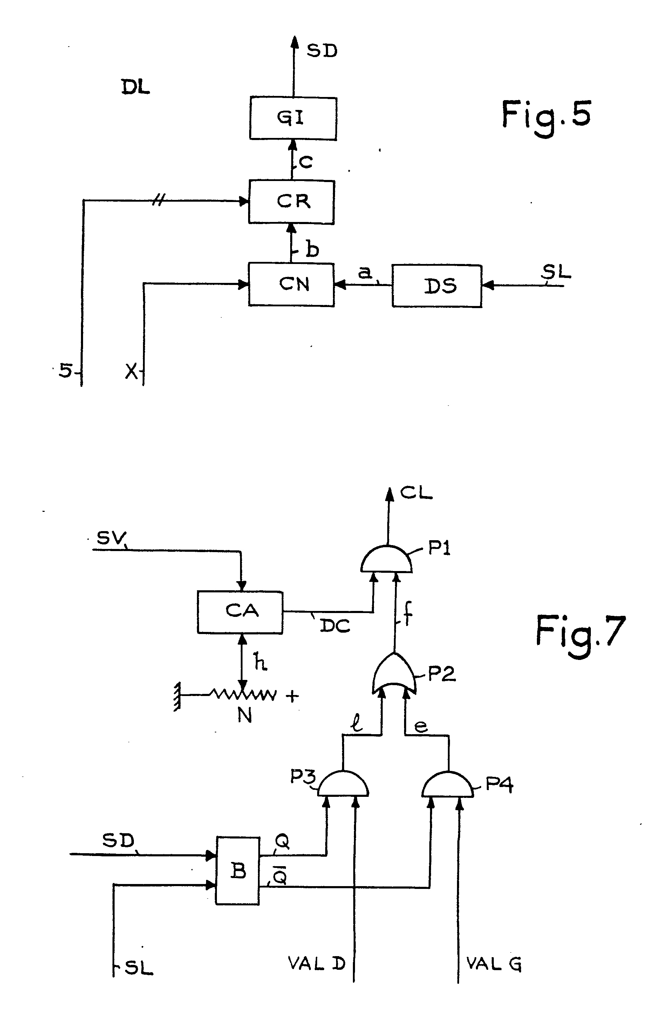

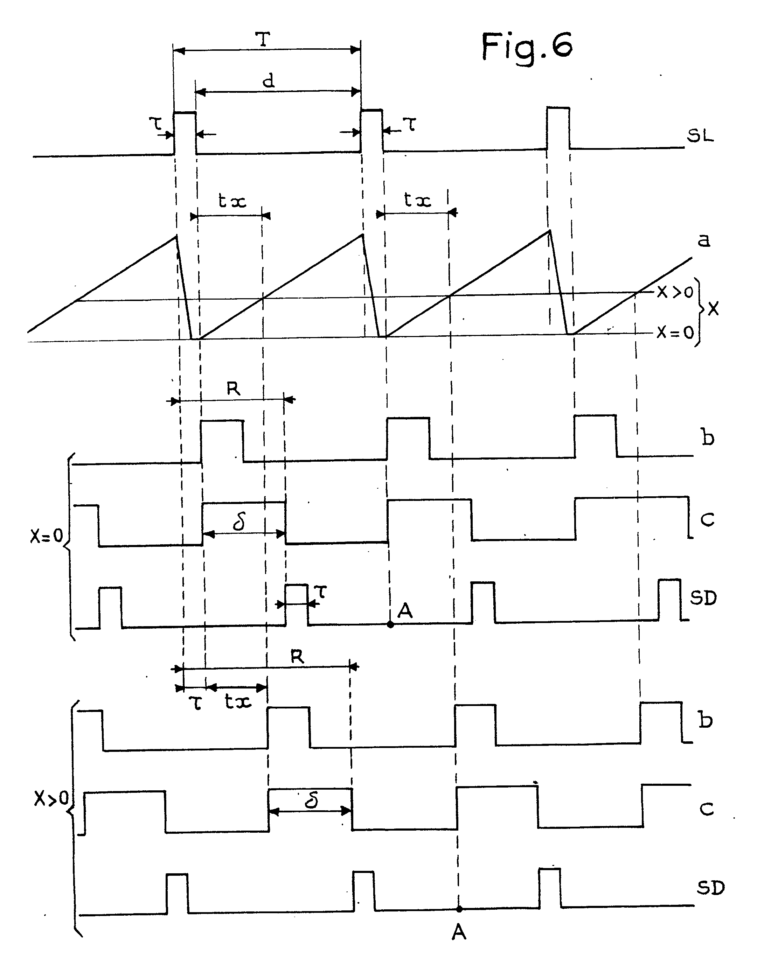

Le schéma détaillé et les diagrammes de signaux correspondant au circuit de décalage de ligne DL sont donnés sur les figures 5 et 6. Le signal de référence de suppression de ligne SL est appliqué à un circuit générateur DS de signal en dent de scie (figure 5). La partie utile de ce signal (a) (figure 6) est constituée par la rampe de pente positive, située entre deux impulsions consécutives du signal SL. Un circuit compara-

teur de niveau CN fournit une impulsion b chaque fois que le niveau de la rampe atteint le niveau X. Pour une meilleure clarté de la description, le diagramme des signaux obtenus a été tracé en supposant d'abord la valeur de X, égale à zéro puis en la supposant supérieure à zéro. Le signal b est appliqué à un circuit à retard CR qui fournit à chaque impulsion reçue, une impulsion de sortie c dont la durée $\delta$ est déterminée par le signal binaire de retard 5. Un circuit générateur d'impulsion GI fournit à chaque impulsion c reçue, une impulsion de durée $\tau$ identique à celle du signal SL. Ce circuit fournit ainsi le signal SD qui présente un retard P par rapport au signal SL. La valeur du retard R est donnée par la relation:

$$R = \tau + tx + \delta$$

dans laquelle tx représente l'intervalle de temps de balayage correspondant au gisement X. Aux trois valeurs particulières R (p), R (p−1) et R (p+1) prises par R, correspondent les trois valeurs $\delta$ (p), $\delta$ (p−1), $\delta$ (p+1) pour $\delta$. La valeur $\delta$ (p) est déterminée de façon que, pour l'image de rang p, le gisement du point A, soit égal à zéro lorsque X est égal à zéro. On a ainsi:

$$\delta\ (p) = \frac{d}{2}, \ \delta\ (p-1) = \frac{d}{2} - \tau, \ \delta\ (p+1) = \frac{d}{2} + \tau,$$

d étant égal à T−$\tau$. Le chéma du circuit de décalage de trame 6 n'est pas représenté. Il peut être formé, en effet, par un circuit analogue au circuit DL mais pour lequel le retard $\delta$ est constant puisque dans l'ensemble décrit, le déplacement en site du bateau ne s'effectue que sur une seule image.

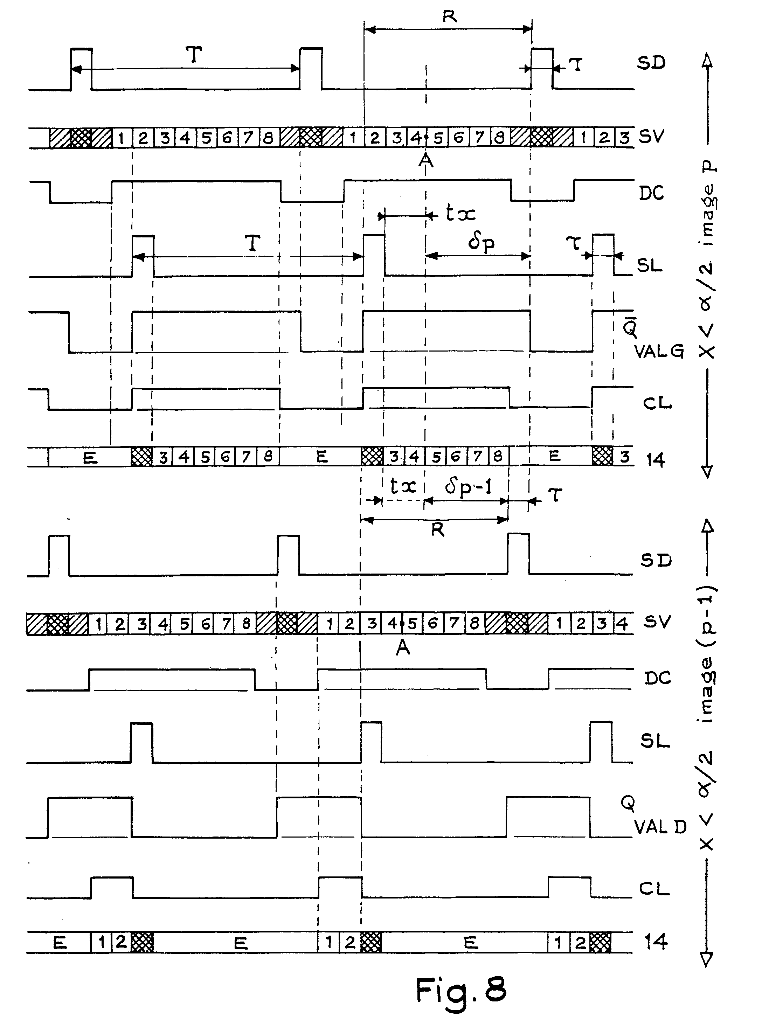

Le schéma détaillé du circuit C de commande d'incrustation et le diagramme des signaux correspondants sont donnés sur les figures 7 et 8. Les signaux SL et SD sont utilisés pour déclencher le basculement, dans un sens et dans l'autre, d'un circuit classique à bascule B. Les deux signaux de sortie Q et $\overline{Q}$ du circuit B sont appliqués respectivement à deux portes logiques du type »ET«, la porte P3 et la porte P4. Ces deux portes reçoivent de plus respectivement le signal VAL D et le signal VAL G. La porte P3 fournit un signal I identique au signal Q lorsque le signal VAL D est au niveau logique 1, et aucun signal lorsque le signal VAL D est au niveau zéro. La porte P4 fournit un signal e identique au signal $\overline{Q}$ lorsque le signal VAL G est au niveau logique 1, et aucun signal lorsque le signal VAL G est au niveau zéro. Les deux signaux I et e sont appliqués à une porte logique P2 du type »OU«. Cette porte fournit un signal f identique au signal Q ou au signal $\overline{Q}$ selon que le signal VAL D ou que le signal VAL G est au niveau 1. Le signal SV issu de la caméra et du circuit AM est appliqué à un comparateur analogique CA. Le signal de détection d'objet DC fourni par ce comparateur, est au niveau 1 lorsque l'amplitude de signal SV est supérieure à celle d'un signal de comparaison h. Il est au niveau 0 dans le cas contraire. Le niveau du signal h est compris entre les niveaux n1 et n2 du signal SV (figure 1). Les signaux DC et f sont appliqués à une porte P1 du type »ET«. Cette porte fournit le signal CL qui commande le fonctionnement du dispositif d'incrustation I. Le signal CL n'est au niveau 1 que si les deux signaux DC et f sont simultanément au niveau 1. Il est au nivau zéro dans le cas contraire. Ainsi le signal 14 issu du dispositif d'incrustation I est, soit identique au signal SV lorsque le signal CL est au niveau 1, soit identique au signal 12 correspondant à l'image d'environnement, lorsque le signal CL est au niveau 0.

Le diagramme des signaux de la figure 8 est divisé en deux parties. La partie supérieure concerne la détermination et l'incrustation de l'image d'ordre p tandis que la partie inférieure concerne l'image d'ordre p − 1. Le signal SV est représenté par la trace qui lui correspondrait théoriquement sur l'écran du moniteur. Celle-ci comprend huit parties correspondant à celles du dessin de la maquette (figure 1). Le signal 14 est formé par le signal SV lorsque le signal CL est au niveau 1. Il est formé par le signal 12 d'image d'environnement dans le cas contraire.

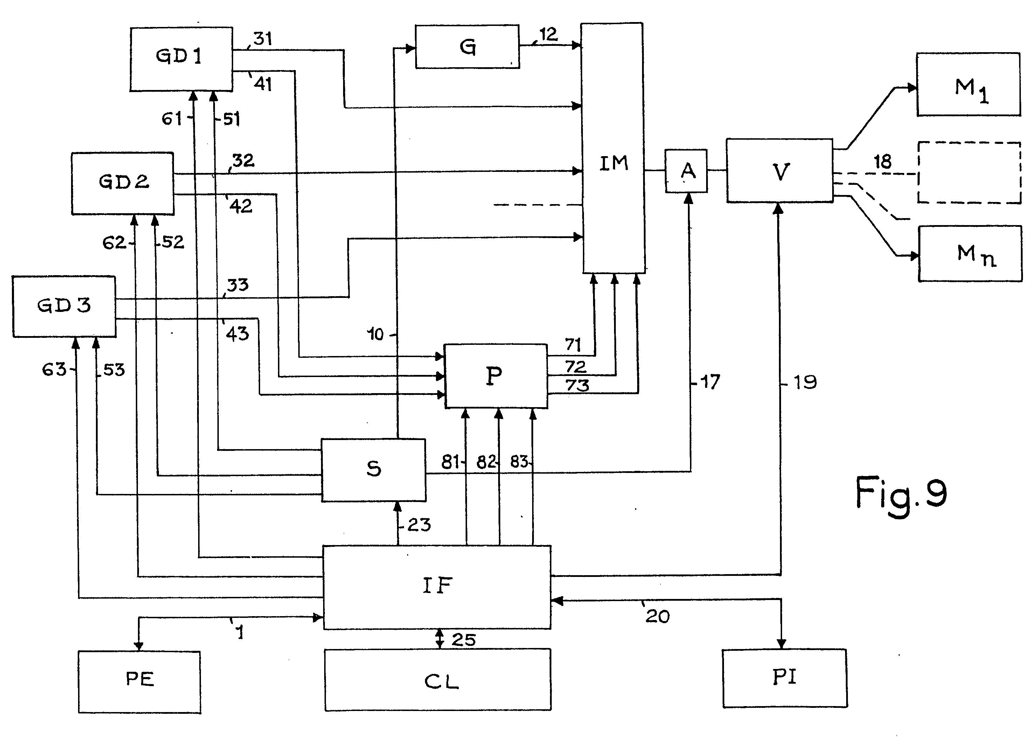

Le schéma d'une première variante perfectionnée du système de génération électronique d'image animée selon l'invention est représenté sur la figure 9. Cette variante permet de faire figurer M objets dans l'imge d'environnement. Son schéma a été limité à la présence de trois objets. L'existence de plusieurs objets implique que ceux-ci puissent se masquer mutuellement et exige que cette variante possède un ensemble de détermination des masques P.

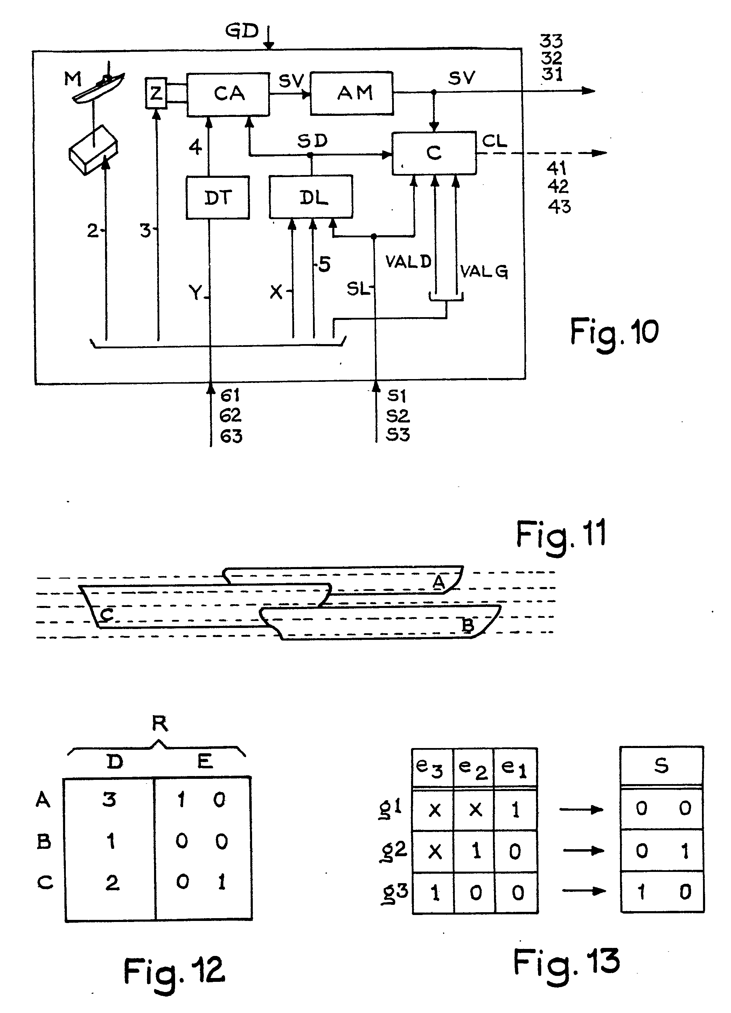

A chaque objet, correspond un générateur d'image décalée GD déjà défini sur la figure 4. Le schéma de ce générateur est tracé à nouveau sous une forme plus compacte sur la figure 10. Pour simplifier la représentation du raccordement de ce générateur avec le reste du système les signaux ont été répartis, suivant leur destination, de manière à ne former que quatre liaisons multiples ou non. Sur la figure 10, les signaux à l'intérieur du générateur sont désignés par les notations de la figure 4, tandis que les liaisons sont désignées par une triple notation chiffrée correspondant aux trois générateurs d'image décalée de l'exemple de réalisation décrit.

La première variante du système (figure 9) comprend ainsi principalement: les générateurs d'image décalée GD1, GD2, GD3, le dispositif de détermination des masques P et le dispositif d'incrustation IM. Les signaux d'image à vidéo-fréquence 31, 32, 33 sont appliqués au dispositif d'incrustation. Les signaux de clé 41, 42 et 43 sont appliqués au dispositif de détermination des masques P qui fournit au dispositif d'incrustation les signaux de commande 71, 72 et 73.

A tout instant, le calculateur établit et tient à jour le classement des bateaux en fonction de leurs distances au navire-école et détermine leurs rangs R dont il fournit les valeurs au dispositif P sous la forme des signaux de rang 81, 82 et 83. Ainsi sur la figure 11, sont représentés trois bateaux A, B, C supposés situés à des distances différentes. Leurs rangs R exprimés sous forme décimale D ou binaire E, sont donnés sur la figure 12. Les signaux de rang sont donc des signaux logiques représentant les nombres binaires E.

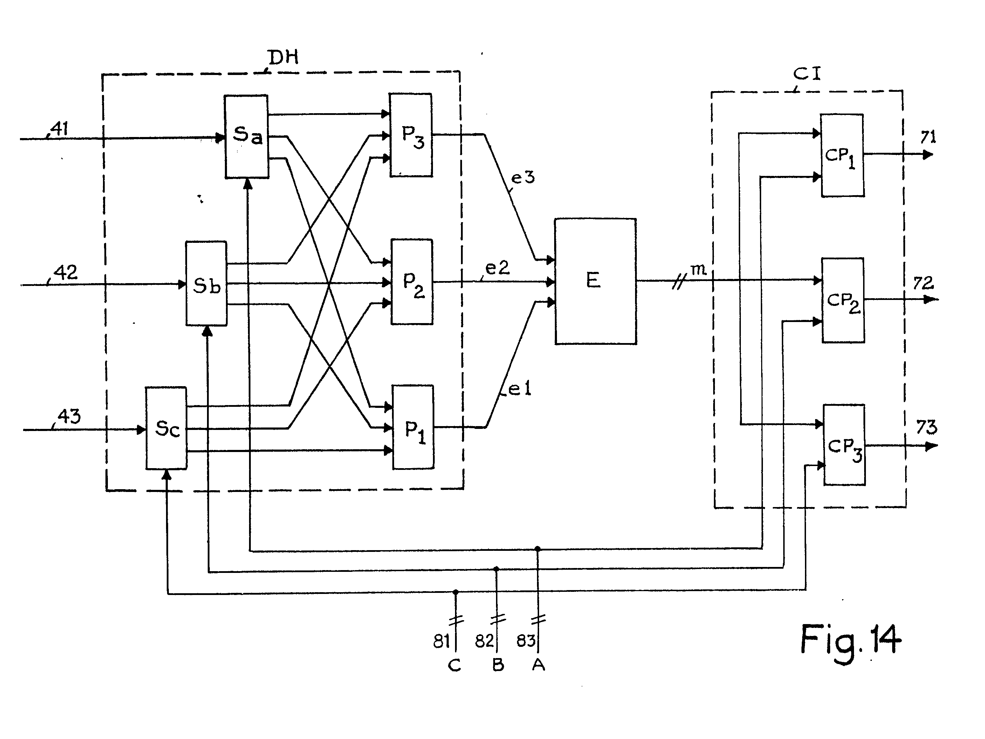

Le schéma détaille du dispositif de détermination des masques est représenté sur la figure 14. Ce dispositif comprend: un discriminateur hiérarchique d'incrustation DH, un encodeur de priorité E et un circuit de commande d'incrustation CI. Le discriminateur DH comprend M circuits sélecteurs Sa, Sb, Sc ... ainsi que M portes logiques P1, P2, P3 ... du type »OU«. Chaque sélecteur, affecté à un des M objets, reçoit le signal de clé (41, 42, 43) ainsi que le signal de rang (81, 82, 83) correspondant à l'objet auquel il est affecté. Il possède M sorties affectées chacune à un rang du classement en distance et fournit le signal de clé sur la sortie déterminée par le signal de rang. Chaque porte logique est affectée à un rang du classement en distance. Ses entrées sont connectées respectivement aux sorties des sélecteurs affectés au rang de la porte considérée. L'ensemble des signaux $e_1$, $e_2$, $e_3$, fournis par les portes et classés suivant les rangs des portes, forme un signal hiérarchique d'incrustation à M bits. Ce signal représente par une suite de M bits ordonnés selon le classement et pour chaque rang, la présence ou l'absence d'un objet (bateau) dans la direction définie par le balayage de l'image. L'encodeur de priorité E est un circuit classique du commerce. Le principe de ce circuit est expliqué au moyen de la figure 13, en supposant pour simplifier que le circuit E considéré est à trois entrées, à 1 bit, telles que $e_1$, $e_2$, $e_3$ et à une sortie à 2 bits, S. Les signaux appliqués à chacune des entrées sont à deux niveaux logiques, 1 ou 0. L'ensemble des nombres binaires représentables par les trois signaux d'entrée peut être divisé en trois groupes $g_1$, $g_2$, $g_3$. Le groupe $g_1$ comprend tous les nombres pour lesquels le niveau 1 est présent sur l'entrée $e_1$, les niveaux sur les deux autres entrées étant quelconques. Le groupe $g_2$ comprend tous les nombres pour lesquels: le niveau zéro est présent sur l'entrée $e_1$, le niveau 1 est présent sur l'entrée $e_2$, tandis que le niveau sur l'entrée $e_3$ peut être quelconque. Le groupe $g_3$ ne comprend qu'un seul nombre: celui pour lequel le niveau 0 est présent à la fois sur les entrées $e_1$ et $e_2$ tandis que le niveau 1 est présent sur l'entrée $e_3$. Le signal hiérarchique d'incrustation est appliqué à l'encodeur de priorité E qui fournit un signal m représentant le code binaire S du rang minimum (correspondant à la distance minimum et au bateau le plus rapproché) qui est occupé par le seul bateau visible et masquant tous les autres dans la direction définie par le balayage de l'image. Le circuit de commande CI détermine pour chaque point de l'image synthétique, l'identité du seul

bateau dont un point doit être incrusté à l'emplacement du point considéré de l'image et commande en conséquence le circuit d'incrustation IM. Le circuit de commande CI est formé par M comparateurs CP1, CP2, CP3 ... affectés respectivement aux M objets. Chacun d'eux reçoit le signal de rang minimum ainsi que le signal de rang qui correspond au bateau auquel le circuit considéré est affecté. Lorsque ces deux signaux sont identiques le comparateur fournit un signal de commande d'incrustation (71, 72, 73). Le circuit d'incrustation IM est un circuit de conception classique qui sélectionne et fournit en sortie l'un des signaux 31, 32, 33 et 12 en fonction des signaux de commande 71, 72 et 73. Il comprend par exemple, quatre contacteurs connectés chacun d'une part à une des entrées et dàutre part, à la sortie du circuit IM. Trois contacteurs sont commandés respectivement par les trois signaux 71, 72, 73. Le circuit IM doit comprendre en outre une porte »OU«, à trois entrées, suivie d'un inverseur de façon que le quatrième contacteur correspondant au signal 12 soit commandé lorsqu'aucun des signaux 71, 72 et 73 n'est présent.

Les systèmes qui viennent d'être décrits ne permettent pas, actuellement, d'obtenir une image animée résultante qui soit à caractère panoramique. En effet, le nombre N d'images élémentaires ne peut être élevé en raison de la limitation imposée à la durée du cycle de mise à jour de ces images.

Afin d'obtenir un nombre N suffisamment grand, il suffit cependant de généraliser le procédé et les systèmes décrits, de façon à obtenir une image résultante formée de Z groupes de n images élémentaires. Dans chacun de ces groups, les images élémentaires de rang homologue sont mises à jour simultanément. Il en résulte que la durée nT du cycle de mise à jour peut conserver une valeur relativement faible (120 ms), tandis que le nombre $N = Z \times n$ peut atteindre des valeurs importantes, suivant la valeur de Z, et permettre d'obtenir éventuellement une image animée circulaire formée, par exemple, de trente images élémentaires.

Ces systèmes sont caractérisés en ce qu'ils comportent, entre autres, Z groupes de n moniteurs, une mémoire à vidéo-disque comprenant Z groupes de n pistes, et Z dispositifs d'incrustation.

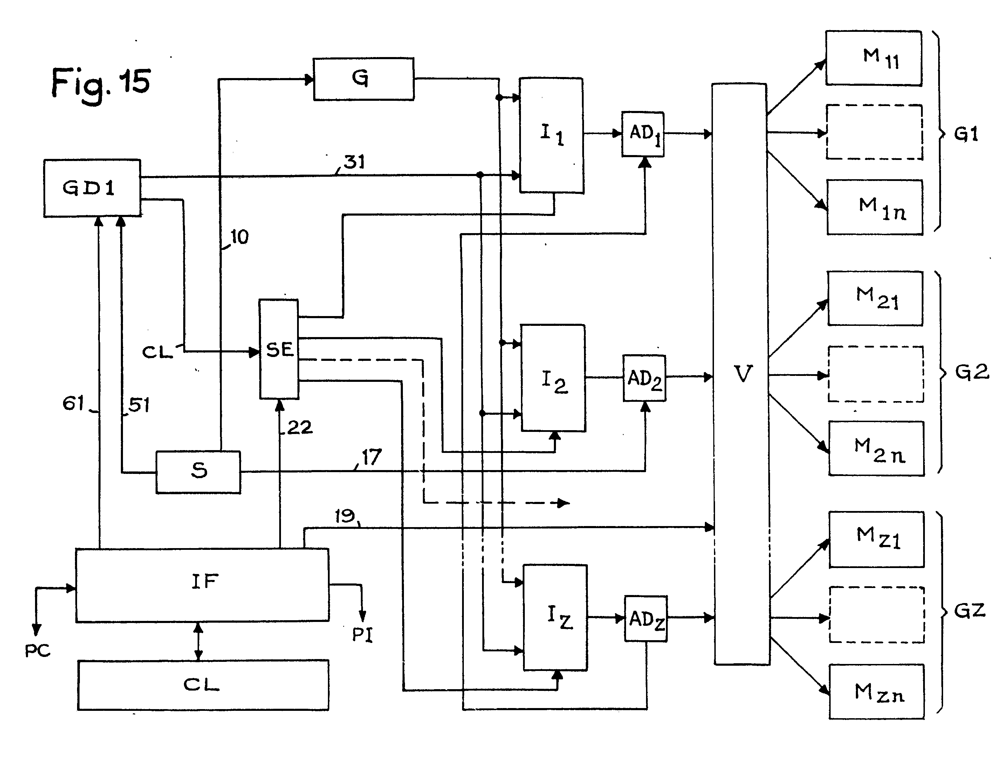

La figure 15 représente le schéma d'un système de génération électronique d'image panoramique animée par un seul objet.

Ce schéma peut être comparé à celui de la figure 4, dont la plupart des références ont été reprises. Outre les éléments caractéristiques signalés, à savoir: Z groupes de n moniteurs $G_1$, $G_2$ ... $G_z$, une mémoire à vidéo-disque V à Z groupes de n pistes, et Z dispositifs d'incrustation, $I_1$, $I_2$ ... $I_z$, le système comprend un élément caractéristique supplémentaire constitué par un sélecteur SE. Ce sélecteur possède une première entrée à laquelle est appliqué le signal CL, Z sorties connectées respectivement aux Z dispositifs d'incrustation et une seconde entrée à laquelle est appliqué un signal de commande 22 fourni par l'interface IF. Par l'intermédiaire de ce sélecteur et en fonction du signal de commande 22 le signal clé CL est appliqué au dispositif d'incrustation associé au groupe de moniteurs particulier pour lequel l'un de ces derniers doit représenter l'objet.

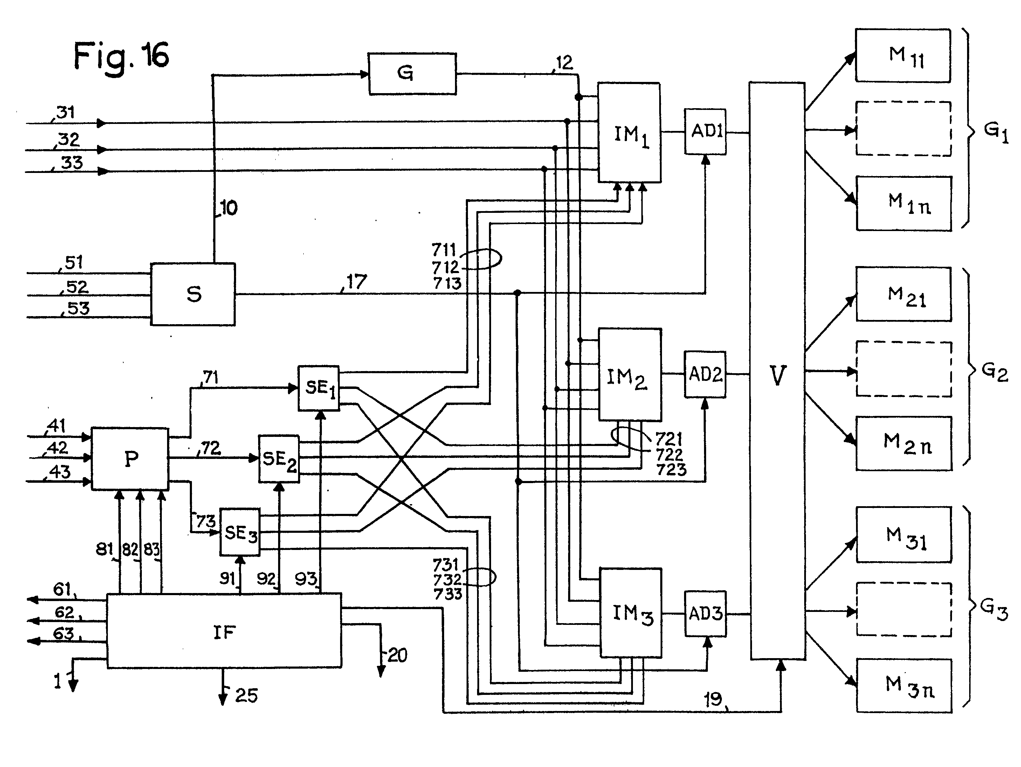

La figure 16 représente le schéma partiel d'un système de génération électronique d'image panoramique animée par plusieurs objets.

Par simplification, ce schéma est limité à un système portant sur trois groupes de n images élémentaires pouvant représenter trois objets. Une généralisation de ce système serait immédiate. Ce schéma peut être comparé celui de la figure 9, dont la plupart des références ont été reprises. Les générateurs d'image décalée (GD$_1$, GD$_2$, GD$_3$), le calculateur, le pupitre et le poste de conduite n'ont pas été représentés. Le système le plus général comprend, entre autres, les éléments caractéristiques suivants: Z groupes de n moniteurs, G$_1$, G$_2$ ... G$_z$, une mémoire à vidéo-disque V à Z groupes de n pistes, Z dispositifs d'incrustation IM$_1$, IM$_2$ ... IM$_z$, et M sélecteurs SE$_1$, SE$_2$ ... SE$_M$ correspondant à M objets. Ces sélecteurs possèdent: une première entrée à laquelle est appliqué un des signaux de commande d'incrustation issus du dispositif P de détermination de masques, Z sorties connectées respectivement aux Z dispositifs d'incrustation, et une seconde entrée à laquelle est appliqué un signal de commande 91, 92, 93 fourni par l'interface.

Il va de soi que le système selon l'invention peut être utilisé indépendamment du système optique décrit dnas la demande de brevet FR-2 360 103 déjà citée; les images élémentaires pourraient être aussi bien obtenues par projection au moyen de projecteurs de télévision au lieu d'être visualisées sur des moniteurs de télévision.

**Revendications**

1. Procédé de génération électronique d'image animée à grand angle, en particulier pour ensemble d'entrainement à la conduite des navires, suivant lequel une image à grand angle de champ est formée par juxtaposition apparente d'images élémentaires visualisées respectivement sous un angle $\alpha$ sur autant de moniteurs de télévision placés dans un poste de conduite d'un système d'entraînement et suivant lequel un objet représenté sur ces images se déplace d'une image à une autre adjacente sans discontinuités afin de simuler le mouvement relatif de cet objet par rapport au poste de conduite, ce procédé étant caractérisé en ce que:

— on définit les coordonnées de l'objet dans l'image à grand angle de champ et dans les images visualisées élémentaires, par les coordonnées d'un point de référence (A) déterminé par l'intersection entre l'axe de rotation du support de la maquette de l'objet (M), et la base de cette maquette;

— on oriente l'axe optique d'une caméra sur le point de référence;

— on détermine les dimensions et la distance de l'objet ainsi que celles de la maquette de façon que l'angle d'ouverture optique de la caméra soit toujours supérieur à l'angle apparent de la maquette;

— on à envoie la caméra un signal de synchronisation qui est un signal de suppression de ligne (SD) affecté d'un retard par rapport au signal de référence de suppression de ligne, fourni à tous les moniteurs, ce retard étant fonction de la position de l'objet dans l'image animée;

— on prélève sur la caméra un signal d'image d'objet (SV) qui, appliqué à un tube cathodique de contrôle synchronisé par le signal de référence de suppression de ligne donnerait une image décalée d'objet {ID(p − 1) et ID(p)} divisée verticalement par une bande noire correspondant au signal retardé de suppression de ligne fourni à la caméra, en une partie droite et en une partie gauche de part et d'autre de cette bande;

— on produit, à l'aide de circuits classiques de génération synthétique d'images, des images d'environnement (IE);

— on produit des images synthétiques {IS(p) et IS(p − 1)} par incrustation des images décalées dans autant d'images d'environnement;

— on enregistre séquentiellement les images synthétiques sur une mémoire (V) telle qu'une mémoire à vidéodisque;

— on lit simultanément toutes les images synthétiques enregistrées pour obtenir sur les moniteurs autant d'images élémentaires visualisées (IV);

— on fait varier l'attitude de la maquette en fonction de l'orientation de l'objet à simuler par rapport au poste de conduite; et

— on fait varier la distance focale de l'objectif de prise de vue de la caméra pour faire varier la grandeur apparente de l'objet à simuler.

2. Procédé selon la revendication 1, caractérisé en ce que:

— on détermine l'ordre p de l'image élémentaire dans laquelle est situé, à un instant donné, le point de référence en prenant la partie entière plus un du quotient de la division par l'angle $\alpha$, du gisement $\theta$ du point de référence dans l'image à grand angle de champ;

— on détermine le gisement X du point de référence dans l'image d'ordre p, en prenant le reste de la division du gisement $\theta$ par l'angle $\alpha$;

— on produit les images synthétiques, une à une, de manière cyclique, en fonction de l'ordre de l'image élémentaire considérée par incrustation électronique de l'image décalée d'objet et d'une image d'environnement lorsqu'il s'agit d'une image élémentaire d'ordre p, d'ordre p − 1 ou d'ordre p + 1, et par simple enregistrement de l'image d'environnement pour les autres ordres;

— on détermine la valeur R (p) du retard apporté au signal retardé de suppression de ligne fourni à la caméra pour une image d'ordre p, de façon que le gisement du point de référence dans cette image soit effectivement égal au gisement X, les valeurs R(p−1) et R(p+1) du retard apporté au signal retarde de suppression de ligne fourni à la caméra pour une image d'ordre p − 1 et pour une image p + 1 étant respectivement égales à R(p) − $\tau$ et R(p) + $\tau$, $\tau$ étant la durée du signal retardé de suppression de ligne ainsi que celle du signal de référence de suppression de ligne, et on valide l'incrustation d'une part lorsque le gisement X est inférieur à $\alpha/2$ pour la partie gauche de l'image décalée d'ordre p ainsi que pour la partie droite de l'image p − 1, d'autre part lorsque le gisement X est supérieur à $\alpha/2$ pour la partie droite de l'image d'ordre p ainsi que pour la partie gauche de l'image d'ordre p + 1.

3. Procédé selon la revendication 1 ou 2, pour la représentation de M objets sur une image, caractérisé par le fait que:

— on établit et tient à jour un classement par rang, des objets en fonction de leur distance;

— on détermine pour chaque rang dans l'ordre du classement, la présence ou l'absence d'un objet dans la direction définie par le balayage de l'image;

— on détermine le rang minimum correspondant à la distance minimum;

— on détermine l'identité de l'objet dont le rang est minimum et l'on commande pour chaque point de l'image et à chaque instant l'apparition du point de cet objet sur l'image.

4. Système de génération électronique d'image animée à grand angle pour la mise en oeuvre du procédé de la revendication 1, comprenant: un dispositif d'incrustation (I) qui reçoit un signal d'image d'objet, un signal d'image d'environnement et un signal de clé d'incrustation et qui fournit un signal de sortie constitué, en fonction du signal de clé, soit par le signal d'image d'objet soit par le signal d'image d'environnement; un premier générateur (GE) d'image qui fournit le signal d'image d'environnement; un second générateur d'image qui fournit le signal d'image d'objet et qui comprend une caméra de télévision (CA) orientée sur une maquette (M) d'objet animé; un ensemble de moniteurs de télévision (M1 − Mn), sur chacun desquels est visualisée une image élémentaire;

un calculateur (CL) et son interface (IF) ainsi qu'un ensemble de synchronisation (S); caractérisé en ce que:

— le second générateur d'image (GD) comprend de plus:
   — un circuit de décalage de ligne qui reçoit: le signal de référence de suppression de ligne (DL), un signal de retard, un signal de gisement X et qui fournit le signal retardé de suppression de ligne;
   — un circuit de commande d'incrustation (C) qui reçoit le signal d'image d'objet, le signal de référence de suppression de ligne, le signal retardé de suppression de ligne ainsi que deux signaux de validation VAL D et VAL G, validant respectivement la partie droite et la partie gauche de l'image décalée;

— en ce que la caméra est reliée au circuit de décalage de ligne pour être synchronisée par le signal retardé de suppression de ligne;

— et en ce que le système comprend de plus une mémoire (V) telle qu'une mémoire à vidéo-disque qui reçoit un signal à vidéo-fréquence composite ainsi qu'un signal d'adresse, et qui fournit un signal à chaque moniteur, le signal à vidéo-fréquence composite étant formé par le signal de sortie du dispositif d'incrustation auquel est ajouté, entre autres signaux de synchronisation, le signal de référence de suppression de ligne, la mémoire à vidéo-disque comprenant au moins autant de pistes d'enregistrement distinctes qu'il existe de moniteurs dans le système, le signal à vidéo-fréquence composite étant enregistré successivement sur chacune des pistes en fonction du signal d'adresse, les signaux fournis respectivement à tous les moniteurs résultant des lectures simultanées des pistes, déclenchées par le signal de référence de suppression de ligne.

5. Système de génération électronique d'image animée à grand angle selon la revendication 4, pour la mise ein oeuvre du procédé selon la revendication 3 et comportant un calculateur fournissant un signal de rang représentant le rang des M objets, caractérisé par le fait qu'il comprend:

— M générateurs d'image décalée (GD1, GD2, GD3) fournissant M signaux clés et M signaux d'image décalée;

— un système de détermination des masques (P) qui reçoit les M signaux clés ainsi que M signaux de rang et qui fournit M signaux de commande d'incrustation;

— un dispositif d'incrustation (IM) qui reçoit les M signaux d'image décalée, les M signaux de commande d'incrustation, le signal d'image d'environnement et qui fournit le signal d'image synthétique.

6. Système de génération électronique d'image animée à grand angle selon la revendication 5, caractérisé en ce que le système de détermination des masques comprend:

— un discriminateur hiérarchique d'incrustation (DH) qui reçoit les M signaux clés, les M signaux de rang et qui fournit un signal hiérarchique d'incrustation à M bits;
— un circuit classique appelé encodeur de priorité (E) qui reçoit le signal hiérarchique d'incrustation et qui fournit un signal de rang minimum;
— un circuit de commande d'incrustation (CI) qui reçoit le signal de rang minimum ainsi que les M signaux de rang et qui fournit les M signaux de commande d'incrustation.

7. Système de génération électronique d'image animée à grand angle selon la revendication 6, caractérisé en ce que le discriminateur hiérarchique d'incrustation comprend:

— M circuits sélecteurs (Sa, Sb, Sc) à M sorties affectées chacune au rang d'un des objets; ces circuits recevant le signal clé et le signal de rang correspondant à l'objet auquel chacun déux est affecté; le signal clé appliqué à l'entrée d'un sélecteur n'étant fourni par celui-ci que sur la sortie affectée au rang défini par le signal de rang;
— M portes logiques (P1, P2, P3), du type »OU« et à M entrées, affectées chacune à un rang; les signaux fournis sur les sorties des sélecteurs affectées à ce rang étant appliqués sur les entrées de la porte affectée à ce rang; l'ensemble des signaux fournis par les M portes et classés selon les rangs des portes correspondantes formant le signal hiérarchique d'incrustation.

8. Système de génération électronique d'image animée à grand angle selon la revendication 6, caractérisé en ce que le circuit de commande d'incrustation comprend:

— M circuits comparateurs CP1, CP2, CP3) affectés respectivement aux M objets qui reçoivent le signal de signal de rang minimum ainsi que le signal de rang correspondant à l'objet auquel chacun d'eux est affecté et qui fournissent chacun un signal de commande d'incrustation lorsque le signal de rang est identique au signal de rang minimum.

9. Système de génération électronique d'image animée à grand angle, selon la revendication 5, dans lequel l'image animée est formée par juxtaposition de Z groupes de n images élémentaires représentant M objets en déplacement caractérisé par le fait qu'il comprend:

Z groupes de n moniteurs, une mémoire à vidéo-disque à Z groupes de n pistes, Z dispositifs d'incrustation et M sélecteurs de signaux clés; ces sélecteurs comportant une première entrée à laquelle est appliqué un des signaux de commande d'incrustation issus du dispositif P de détermination des masques, Z sorties connectées respectivement aux Z dispositifs d'incrustation, et une seconde entrée à laquelle est appliqué un signal de commande fourni par l'interface.

**Patentansprüche**

1. Verfahren zur elektronischen Erzeugung bewegter Bilder mit weitem Blickwinkel, insbesondere für ein Trainingsgerät für die Schiffsführung, demgemäß ein Weitwinkelbild gebildet wird durch offenbares Nebeneinandersetzen von je unter einem Winkel $\alpha$ auf je einem im Leitstand eines Trainingssystems angeordneten Fernsehmonitor sichtbar gemachten Elementarbildern, und dem gemäß ein Objekt, das auf diesen Bildern dargestellt ist, sich von einem zum nächstbenachbarten Bild ohne Bruchstelle verschiebt, so daß die Relativbewegung dieses Objekts bezüglich des Leitstandes simuliert wird, wobei dieses Verfahren dadurch gekennzeichnet ist, daß

— die Koordinaten des Objektes im Weitwinkelbild und in den sichtbar gemachten Elementarbildern durch die Koordinaten eines durch den Schnittpunkt zwischen der Drehachse des Trägers des Objektmodells (M) und der Basis dieses Modells gebildeten Bezugspunktes (A) definiert werden,
— die optische Achse einer Kamera auf den Bezugspunkt orientiert wird,
— die Abmessungen und der Abstand des Objektes sowie die des Modells so bestimmt werden, daß der optische Öffnungswinkel der Kamera stets größer als der offenbare Winkel des Modells ist,
— ein Synchronisationssignal zur Kamera gesandt wird, das ein Zeilenunterdrückungssignal (SD) ist und bezüglich des Zeilenunterdrückungs-Bezugssignals verzögert ist, das allen Monitoren geliefert wird, wobei die Verzögerung von der Lage des Objektes im bewegten Bild abhängt,
— ein Objektbildsignal (SV) der Kamera entnommen wird, das einer vom Zeilenunterdrückungs-Bezugssignal synchronisierten Kontrollkathodenstrahlröhre zugeführt ein verschobenes Objektbild {ID(p−1) und ID(p)} ergäbe, das senkrecht durch ein dem verzögerten, von der Kamera gelieferten Zeilenunterdrückungssignal entsprechendes schwarzes Band in einen linken und einen rechten Teil auf beiden Seiten dieses Bandes aufgeteilt ist,

— mit Hilfe klassischer Schaltkreise zur synthetischen Bilderzeugung Umgebungsbilder (IE) erzeugt werden,
— synthetische Bilder {IS(p) und IS(p-1)} durch Einsetzen der verschobenen Bilder in ebensoviele Umgebungsbilder hergestellt werden,
— die synthetischen Bilder sequentiell in einen Speicher (V), wie z. B. einen Videoplattenspeicher, eingespeichert werden,
— gleichzeitig alle eingespeicherten synthetischen Bilder gelesen werden, um auf den Monitoren genausoviele sichtbar gemachte Elementarbilder (IV) zu erhalten,
— das Verhalten des Modells in Abhängigkeit von der Orientierung des zu simulierenden Objektes in bezug auf den Leitstand verändert wird und
— der Brennabstand des Abbildungsobjektivs der Kamera verändert wird, um die offenbare Größe des zu simulierenden Objektes zu verändern.

2. Verfahren nach Anspruch 1, dadurch gekennzeichnet, daß

— die Ordnung p des Elementarbildes bestimmt wird, in dem sich zu einem bestimmten Zeitpunkt der Bezugspunkt befindet, indem der ganze Teil plus eines des Quotienten der Division durch den Winkel $\alpha$ des Seitenwinkels $\Theta$ des Bezugspunktes im Bild mit weitem Blickwinkel genommen wird,
— der Seitenwinkel X des Bezugspunktes im Bild der Ordnung p bestimmt wird, indem man den Rest der Division des Seitenwinkels $\Theta$ durch den Winkel $\alpha$ nimmt,
— die synthetischen Bilder einzeln in zyklischer Art hergestellt werden, in Abhängigkeit der Ordnung des betrachteten Elementarbildes durch elektronisches Einsetzen des verschobenen Bildes des Objektes und eines Umgebungsbildes, wenn es sich um ein Elementarbild der Ordnung p, der Ordnung p-1 oder der Ordnung p+1 handelt, und durch einfaches Einspeichern des Umgebungsbildes für die anderen Ordnungen,
— der Wert R(p) der dem verzögerten Zeilenunterdrückungssignal verliehenen Verzögerung, das der Kamera für ein Bild der Ordnung p geliefert wird, so daß der Seitenwinkel des Bezugspunktes in diesem Bild tatsächlich dem Seitenwinkel X entspricht, wobei die Werte R(p-1) und R(p+1) der dem verzögerten Zeilenunterdrückungssignal, das der Kamera geliefert wird, verliehenen Verzögerung für ein Bild der Odnung p-1 und für ein Bild der Ordnung p+1 je gleich R(p)-$\tau$ bzw. R(p)+$\tau$ sind, wobei $\tau$ die Dauer des verzögerten Zeilenunterdrückungssignals wie auch die des Zeilenunterdrückungs-Bezugssignals ist, und das Einsetzen einerseits dann für gültig erklärt wird, wenn der Seitenwinkel X kleiner als $\alpha/2$ für den linken Teil des verschobenen Bildes der Ordnung p wie auch für den rechten Teil des Bildes p-1 ist, andererseits, wenn der Seitenwinkel X größer als $\alpha/2$ für den rechten Teil des Bildes der Ordnung p wie auch den linken Teil des Bildes der Ordnung p+1 ist.

3. Verfahren nach Anspruch 1 oder 2 für die Sichtbarmachung von M Objekten in einem Bild, dadurch gekennzeichnet, daß

— eine Aufstellung nach Rang der Objekte in Abhängigkeit von ihrer Entfernung erarbeitet und auf dem laufenden gehalten wird,
— für jeden Rang in der Reihenfolge der Aufstellung das Vorhandensein oder Fehlen eines Objektes in der durch die Abtastung des Bildes bestimmten Richtung bestimmt wird,
— der der Mindestentfernung entsprechende Mindestrang bestimmt wird,
— die Identität des Objektes bestimmt wird, das den Mindestrang hat, und für jeden Punkt des Bildes und zu jedem Zeitpunkt das Auftreten des Punktes dieses Objektes auf dem Bild gesteuert wird.

4. System zur elektronischen Erzeugung bewegter Bilder mit weitem Blickwinkel für den Einsatz des Verfahrens gemäß Anspruch 1, mit einer Einsetzvorrichtung (I), die ein Objektbildsignal, ein Umgebungsbildsignal und ein Einsetz-Schlüsselsignal zugeführt erhält und die ein Ausgangssignal liefert, das in Abhängigkeit vom Schlüsselsignal entweder aus dem Objektbildsignal oder aus dem Umgebungsbildsignal besteht, mit einem ersten Bilderzeuger (GE), der das Umgebungssignal liefert, mit einem zweiten Bilderzeuger, der das Objektbildsignal liefert. und der eine Fernsehkamera (CA) aufweist, die auf ein Modell (M) eines bewegten Objektes ausgerichtet ist, mit einer Einheit von Fernsehmonitoren (M1 – Mn), auf denen je ein Elementarbild sichtbar gemacht ist, mit einem Rechner (CL) und seinem Schnittstellenschaltkreis (IF) sowie mit einer Synchronisationseinheit (S), dadurch gekennzeichnet, daß

— der zweite Bilderzeuger (GD) außerdem aufweist:
  — einen Zeilenverschiebungsschaltkreis, der das Zeilenunterdrückungs-Bezugssignal (DL), ein Verzögerungssignal und ein Seitenwinkelsignal X empfängt und das verzögerte Zeilenunterdrückungssignal liefert,
  — einen Einsetz-Steuerschaltkreis (C), der das Objektsbildsignal, das Zeilenunterdrückungs-Bezugssignal, das verzögerte Zeilenunterdrückungssignal sowie zwei Bewertungssignale VAL D und VAL G empfängt, die je den rechten bzw. linken Teil des verschobenen Bildes gültig machen,

- die Kamera mit dem Verschiebungsschaltkreis verbunden ist, um durch das verzögerte Zeilenunterdrückungssignal synchronisiert zu werden,
- und daß das System außerdem einen
Speicher (V), wie z. B. einen Videoplattenspeicher, aufweist, der ein zusammenge-
setztes Signal mit Videofrequenz und ein
Adressensignal empfängt und der jedem
Monitor ein Signal liefert, wobei das
zusammengesetzte Signal mit Videofrequenz aus dem Ausgangssignal der Einsetzvorrichtung gebildet wird, dem neben
anderen Synchronisationssignalen das Zei-
lenunterdrückungs-Bezugssignal hinzuge-
fügt wird, wobei der Videoplattenspeicher
mindestens soviele einzelne Speicherspuren aufweist, wie es Monitoren im System
gibt, wobei das zusammengesetzte Signal
mit Videofrequenz nacheinander auf jeder
der Spuren in Abhängigkeit vom Adressensignal eingespeichert wird, wobei die an alle
Monitoren gelieferten Signale aus dem
gleichzeitigen Lesen aller Spuren resultieren, das durch das Zeilenunterdrückungs-
Bezugssignal ausgelöst wird.

5. System zur elektronischen Erzeugung
bewegter Bilder mit weitem Blickwinkel gemäß
Anspruch 4 für den Einsatz des Verfahrens
gemäß Anspruch 3 und mit einem Rechner, der
ein Rangsignal liefert, das den Rang der M
Objekte darstellt, dadurch gekennzeichnet, daß
es aufweist:

- M Erzeuger eines verschobenen Bildes
(GD1, GD2, GD3), die M Schlüsselsignale
und M Signale eines verschobenen Bildes
liefern,
- ein System zur Bestimmung der Masken (P),
das die M Schlüsselsignale wie auch M
Rangsignale empfängt und das M Einsetz-
Steuersignale liefert,
- eine Einsetzvorrichtung (IM), die die M
Signale eines verschobenen Bildes, die M
Einsetz-Steuersignale und das Umgebungsbildsignal empfängt und die das synthetische Bildsignal liefert.

6. System zur elektronischen Erzeugung
bewegter Bilder mit weitem Blickwinkel gemäß
Anspruch 5, dadurch gekennzeichnet, daß das
Maskenbestimmungssystem umfaßt:

- einen hierarchischen Einsetzdiskriminator
(DH), der die M Schlüsselsignale und die M
Rangsignale empfängt und der ein hierarchisches Einsetzsignal mit M Bits liefert,
- einen klassischen Schaltkreis, der Prioritätskodierer (E) genannt wird und das hierarchische Einsetzsignal empfängt und ein Mindestrangsignal liefert,
- einen Einsetz-Steuerschaltkreis (CI), der das
Mindestrangsignal sowie die M Rangsignale
empfängt und der die M Einsetzsteuersignale liefert.

7. System zur elektronischen Erzeugung
bewegter Bilder mit weitem Blickwinkel gemäß
Anspruch 6, dadurch gekennzeichnet, daß der
hierarchische Einsatzdiskriminator umfaßt:

- M Auswahlschaltkreise (Sa, Sb, Sc) mit M
Ausgängen, die je dem Rang eines der
Objekte zugeteilt sind, wobei diese Schaltkreise das Schlüsselsignal und das Rangsignal empfangen, das dem Objekt entspricht,
dem sie zugeordnet sind, und wobei das an
den Eingang eines Auswahlschaltkreises
angelegte Schlüsselsignal von diesem nur
an den Ausgang geliefert wird, der dem
Rang zugeteilt ist, der vom Rangsignal
definiert ist,
- M logische Tore (P1, P2, P3) vom Typ
»ODER« und mit M Eingängen, die je einem
Rang zugeordnet sind, wobei die an den
Ausgängen der Auswahlschaltkreise, die
diesem Rang zugeordnet sind, gelieferten
Signale an die Eingänge des zu diesem Rang
gehörenden Tors angelegt werden und
wobei die Gesamtheit der von den M Toren
gelieferten und gemäß den Rängen der
entsprechenden Tore eingeordneten Signale das hierarchische Einsetzsignal bildet.

8. System zur elektronischen Erzeugung
bewegter Bilder mit weitem Blickwinkel gemäß
Anspruch 6, dadurch gekennzeichnet, daß der
Einsetzsteuerkreis enthält:

- M Komparatorschaltkreise (CP1, CP2, CP3),
die je einem der M Objekte zugeordnet sind
.und das Mindestrangsignal sowie das dem
Objekt, dem jeder von ihnen zugeordnet ist,
entsprechende Rangsignal zugeführt erhalten und je ein Einsetzsteuersignal liefern,
wenn das Rangsignal dem Mindestrangsignal gleicht.

9. System zur elektronischen Erzeugung
bewegter Bilder mit weitem Blickwinkel nach
Anspruch 5, in dem das bewegte Bild durch
Nebeneinandersetzen von Z Gruppen von n
Elementarbildern, die M sich bewegende Objekte zeigen, gebildet wird, dadurch gekennzeichnet, daß es aufweist:

Z Gruppen von n Monitoren, einen Videoplattenspeicher mit Z Gruppen von n
Spuren, Z Einsetzvorrichtungen und M
Auswahlschaltkreise für Schlüsselsignale,
wobei diese Auswahlschaltkreise einen
ersten Eingang, an den eines der von der
Maskenbestimmungsvorrichtung P kommenden Einsetzsteuersignale angelegt wird,
Z je mit den Z Einsetzvorrichtungen verbundene Ausgänge und einen zweiten Eingang
aufweisen, an den ein vom Schnittstellenschaltkreis geliefertes Steuersignal angelegt wird.

## Claims

1. A process for electronically producing moving pictures with large aperture angle, particularly for a vessel pilot training device, according to which a picture with a large aperture angle is built up by apparent juxtaposition of elementary pictures which are visualized respectively under an angle $\alpha$ on as many television monitors placed in a control post of a training system, and according to which an object represented on these pictures moves from one picture to an adjacent one without discontinuities in order to simulate the relative movement of this object with respect to the control post, the process being characterized by the fact that:

— the coordinates of the object in the large angele picture and in the elementary visualized pictures are defined by the coordinates of a reference point (A) which is determined by the intersection of the rotation axis of the object model base (M) with the base of that model;

— the optical axis of a camera is directed to that reference point;

— the dimensions and the distance of the object as well as of the model are determined such that the optical aperture angele of the camera is always larger than the apparent angele of the model;

— a synchronization signal is sent to the camera which is a line suppression signal (SD) being delayed with respect to the line suppression reference signal which is delivered to all monitors, the delay depending on the position of the object in the moving picture;

— an object picture signal (SV) is taken from the camera which, applied to a control cathode ray tube which is synchronized by the line suppression reference signal, would produce a delayed object picture {ID(p−1) and ID(p)} which is divided vertically by a black stripe, corresponding to a delayed line suppression signal which is delivered to the camera, into a right hand part and a left hand part on both sides of said stripe;

— by means of classical circuits for the synthetic generation of pictures environment pictures (IE) are produced;

— synthetic pictures {Is(p) and IS(p−1)} are produced by the insertion of the delayed pictures in as many environment pictures;

— the synthetic pictures are sequentially fed into a memory (V) such as a videodisk memory;

— all memorized synthetic pictures are read simultaneously in order to obtain on the monitors as many elementary visualized pictures (IV);

— the attitude of the model is changed according to the orientation of the object which is to be simulated, with respect to the control post, and

— the focal distance of the camera lens system is changed in order to change the apparent size of the object which is to be simulated.

2. A process according to claim 1, characterized by the fact that

— the order p of the elementary picture is determined, in which at a given moment the reference point is situated, by taking the entire part plus one of the quotient of the division of the lateral angle $\theta$ of the reference point in the large angle picture by the angle $\alpha$,

— the lateral displacement X of the reference point in the picture of the order p is determined by taking the rest of the division of the lateral angle $\theta$ by the angle $\alpha$,

— the synthetic pictures are produced one by one in a cyclic manner and depending on the order of the considered elementary picture, by electronic insertion of the delayed picture of the object and of an environment picture, if an elementary picture of the order p, of the order p−1 or of the order p+1 is concerned, and by simple registration of the environment picture as far as the other orders are concerned,

— the delay value R(p) applied to the delayed line suppression signal which is furnished to the camera for a picture of the order p is determined in such a way that the lateral displacement of the reference point in a picture is in reality equal to the lateral displacement X, the delay values R(p−1) and R(p+1) applied to the delayed line suppression signal which is furnished to the camera for a picture of the order p−1 and for a picture p+1 being respectively equal to R(p)−$\tau$ and R(p)+$\tau$, $\tau$ being the duration of the delayed line suppression signal and the duration of the line suppression reference signal, and the insertion is validated on the one hand if the lateral displacement X is smaller than $\alpha/2$ for the left hand sinde of the delayed picture of the order p and for the right hand side of the picture p−1, and on the other hand if the lateral displacement X is larger than $\alpha/2$ for the right hand side of the picture of the order p as well as for the left hand side of the picture of the order p+1.

3. A process according to claim 1 or 2 for the representation of M objects on the picture, characterized by the fact that

— a classification according to the order of the objects as a function of their distance is established and maintained,

— for each order in the classification, the presence or absence of an object in the defined direction is determined by screening the picture,

- the minimum order corresponding to a minimum distance is determined,
- the identity of the object of minimum order is determined and for each point of the picture and at each moment the appearance of the point of this object on the picture is commanded.

4. A system for the electronic generation of a moving picture of large angle for realizing the process according to claim 1, comprising: an insertion device (I) receiving an object picture signal, an environment picture signal and an insertion key signal and which furnishes an output signal constituted in dependance of the key signal by the object picture signal or by the environment picture signal; a first picture generator (GE) delivering the environment picutre signal; a second picture generator furnishing the object picture signal and comprising a television camera (CA) directed to a model (M) of the moving object; an assembly of television monitors (M1 ... Mn) on each of which an elementary picture is visualized; a calculator (CL) and its interface (IF) as well as a synchronization assembly (S), characterized by the fact that

- the second picture generator (GD) moreover comprises:
  - a line shifting circuit which receives the line suppression reference signal (DL), a delay signal, a lateral displacement signal X and which delivers the delayed line suppression signal;
  - an insertion command circuit (C) receiving the object picture signal, the line suppression reference signal, the delayed line suppression signal as well as two validation signals VAL D and VAL G which render valid respectively the left hand side and the right hand side of the delayed picture;
- the camera is connected to the line shifting circuit in order to be synchronized by the delayed line suppression signal,
- and that the system moreover comprises a memory (V) such as a videodisk memory receiving a combined video frequency signal as well as an address signal and delivering a signal to each monitor, the combined video frequency signal being constituted by the output signal of the insertion device to which apart from other synchronization signals the line suppression reference signal is joined, the video disk memory comprising at least as many distinct memory tracks as there exist monitors in the system, the combined video frequency signal being successively registered on each track as a function of the address signal, the signals applied respectively to all the monitors resulting from the simultaneous reading of the tracks which is actuated by the line suppression reference signal.

5. System for electronically generating moving pictures with wide angle according to claim 4 for the realization of the process according to claim 3, and comprising a calculator which furnishes a rank signal representing the rank of M objects, characterized by the fact that it comprises:

- M generators (GD1, GD2, GD3) of delayed pictures furnishing M key signals and M signals of delayed picture,
- a mask determination system (P) receiving the M key signals as well as M rank signals and furnishing M insertion command signals,
- an insertion device (IM) receiving the M signals of delayed picture, the M insertion command signals, the environment picture signal and furnishing the synthetic picture signal.

6. System for electronically generating moving pictures of large angle according to claim 5, characterized by the fact that the mask determination system comprises

- a hierarchic insertion discriminator (DH) receiving the M key signals, the M rank signals and furnishing a hierarchich insertion signal of M bits;
- a classical circuit called priority encoder (E) receiving the hierarchic insertion signal and furnishing a signal of minimum rank;
- an insertion command circuit (CI) receiving the minimum rank signal as well as the M rank signals and furnishing the M insertion command signals.

7. System for electronically generating moving pictures of large angle according to claim 6, characterized by the fact that the hierarchic insertion discriminator comprises:

- M selector circuits (Sa, Sb, Sc) with M outputs each of which is affected to the rank of one of the objects, these circuits receiving the key signal and the rank signal corresponding to the object to which each of them corresponds; the key signal applied to the input of a selector being furnished only by this selector at the output which corresponds to the rank defined by the rank signal;
- M logical gates of the »OR« type (P1, P2, P3) and having M inputs which are attributed each to one rank; the signals furnished to the outputs of the selectors which correspond to that rank being applied to the inputs of the gate corresponding to that rank; the group of signals which are delivered by the M gates and which are classified according to the ranks of the corresponding gates constituting the hierarchic insertion signal.

8. System for electronically generating moving pictures of large angle according to claim 6, characterized by the fact that the insertion command circuit comprises:

— M comparator circuits (CP1, CP2, CP3) attributed respectively to the M objects and receiving the minimum rank signal as well as the rank signal corresponding to the object to which each of them is attributed, each of them furnishing an insertion command signal if the rank signal is identical to the minimum rank signal.

9. System for electronically generating moving pictures of large angle according to claim 5, in which the moving picture is built up by juxtaposing Z groups of n elementary images representing M moving objects, characterized by the fact that it comprises:

Z groups of n monitors, a video disk memory weith Z groups of n tracks, Z insertion devices and M key signal selectors, these selectors comprising a first entry to which one of the insertion command signals is applied which are delivered by the mask determination device (P), Z outputs connected respectively to the Z insertion devices and a second input to which a command signal is applied, which is furnished by the interface.

Fig.1

Fig.2

Fig.3

Fig.4

0 015 839

SD

DL

Fig.5

GI

c

CR

b

a

CN ← DS ← SL

5

X

CL

SV

P1

CA

DC f

P2

h

ℓ e

N +

P3 P4

SD

Q

B

Q̄

SL

VAL D VAL G

Fig.7

Fig.6

Fig. 8

Fig.9

0 015 839

Fig. 10

Fig. 11

Fig. 12

Fig. 13

Fig. 14

0 015 839

Fig. 15

Fig. 16